# FASCICULE DE BREVET EUROPEEN

(11) **EP 0 795 750 B1**
(45) Date de publication et mention de la délivrance du brevet: **19.05.2004**
(21) Numéro de dépôt: 97400534.0
(22) Date de dépôt: 11.03.1997
(51) Int. Cl.: G01N 30/96

(54) **Procédé de dosage d'au moins un élément choisi parmi les éléments suivants présents dans une solution: Pu(IV), Pu(VI), l'uranium et les nitrates, par chromatographie en phase liquide.**
Verfahren für die Quantifizierung mindestens eines Elementes, das aus den folgenden in einer Lösung anwesenden Elementen ausgewählt ist: Pu(IV), Pu(VI), Uran und Nitraten, durch Flüssigkeitschromatographie.
Measuring process of at least one element chosen among the following elements present in a solution: Pu(IV), Pu(VI), uranium and nitrates, by liquid chromatography.

(30) Priorité: 13.03.1996 FR 9603146
(43) Date de publication de la demande: 17.09.1997
(73) Titulaire: COMPAGNIE GENERALE DES MATIERES NUCLEAIRES, 78140 Velizy Villacoublay (FR)
(72) Inventeur: Cojean, Joel, 30200 Bagnols sur Ceze (FR); Daubizit, Michel, 84000 Avignon (FR)
(74) Mandataire: Poulin, Gérard

(56) Documents cités:
- FR-A- 2 691 542
- ANALUSIS, vol. 15, no. 5, 1987, pages 209-216, XP002020165 J.P. MULLER: "détermination de l'uranium dans les solutions de retraitement des combustibles irradiés par chromatographie en phase liquide"
- JOURNAL OF CHROMATOGRAPHY A, vol. 16, no. 7, 1993, SCIENCE NL, pages 1589-1599, XP000610888 M. RIAZ: "assay of uranium in the presence of various interfering ions using ion-pair liquid-chromatography"
- CHROMATOGRAPHIA, vol. 42, no. 1/2, Janvier 1996, FRIEDR. VIEWEG & SOHN, page 34-38 XP000610896 S. B. BUTT ET AL.: "Simultaneous assay of copper iron and uranium in phosphate media by ion-pair liquid chromatography"
- National Technical Information Service US Department of Commerce, Springfield, US Accession # DE92040358/XAB 17 juillet 92 NTIS data base, Y.C. ROGERS ET AL. "Quantitative analysis of Pu and U using reversed-phase liquid chromatography and spectrophotometric detection" XP002020166

## Description

### Domaine technique

La présente invention a pour objet un procédé de dosage d'au moins un des éléments dits éléments d'intérêt choisis parmi le plutonium Pu(IV), le plutonium Pu(VI), l'uranium et les nitrates, présents dans des solutions aqueuses ou certaines matrices organiques. Elle s'applique en particulier au dosage de Pu(IV), de Pu(VI), de l'uranium et des nitrates totaux, même à l'état de traces, dans les diverses solutions d'une installation de retraitement de combustibles nucléaires usés, telles que les solutions à forte teneur en uranium ou plutonium (de 3 à 500 g/l) comme les solutions de dissolution de combustibles irradiés, les eaux mères oxaliques, les concentrats de plutonium, les concentrats de produits de fission, les solvants chargés et les solutions à faible teneur en uranium et plutonium (de 0,003 à 2 g/l), comme les solutions pures d'uranium, de plutonium et d'acide nitrique, les solutions de pelage de combustibles, les solutions de dissolution de l'oxyde de plutonium, les solutions des stations de traitement des effluents, les solutions de produits de fission, les solutions de traitement au carbonate des solvants organiques, les solvants organiques purifiés et les solutions sortant des colonnes d'extraction de l'uranium, etc..

Elle s'applique également au dosage d'uranium dans d'autres types de solutions telles que les solutions de bains sulfochromiques, les solutions de tripolyphosphates, les solutions de dissolution de minerais d'uranium, les eaux de rivières, les liquides physiologiques, etc..

### Etat de la technique

Jusqu'à présent, dans les usines de retraitement des combustibles nucléaires usés, les dosages de Pu(IV), de Pu(VI), d'uranium et des nitrates étaient effectués entre autre par potentiométrie, pHmétrie, spectrophotométrie, dilution isotopique, spectrométrie alpha, spectrofluorimétrie, spectrométrie d'émission à source plasma, chromatographie en phase liquide, fluorimétrie laser et fluorescence X hybride.

Cependant, aucune de ces méthodes ne convient pour doser simultanément au moins deux des éléments d'intérêt choisis parmi le Pu(IV), le Pu(VI), l'uranium et les nitrates, et ce, dans une gamme étendue de concentrations.

Un procédé de dosage d'uranium par chromatographie en phase liquide est décrit par exemple par J.P. MULLER et al. dans ANALUSIS, 1987, vol. 15/n°5, p. 209-216. Ce procédé consiste à retenir l'uranium sous la forme d'une paire d'ions constituée de l'anion trinitrate d'uranyle et du cation tétrahexylammonium sur une phase stationnaire à base de silice greffée, à éluer l'uranium par une phase mobile contenant de l'acétonitrile, de l'eau et un ion développeur tel que le sulfate, puis à détecter l'uranium sortant de la colonne par spectrophotométrie dans l'ultraviolet à 254 nm. Il est également cité dans cet article la possibilité d'utiliser comme phase mobile un mélange eau/méthanol. Il est également signalé que le plutonium à la valence VI perturbe les chromatogrammes mais qu'il est possible de s'en affranchir en ajoutant à l'échantillon dilué avant l'injection de l'acide ascorbique qui réduit sélectivement le plutonium. Cette méthode n'est toutefois pas applicable au dosage simultané par chromatographie en phase liquide du plutonium et de l'uranium, et ne permet pas la détection d'uranium à faibles concentrations.

Une amélioration de cette technique a été donnée dans FR-A-2 691 542 qui décrit un procédé de dosage de l'uranium seul consistant à injecter l'échantillon à doser dans une colonne de chromatographie remplie d'une phase stationnaire apolaire et parcourue par une phase mobile contenant l'ion cétyltriméthylammonium, un anion sulfate et un solvant favorisant la présence d'uranium sous forme trinitrate d'uranyle puis à déterminer la quantité d'uranium sortant de la colonne par spectrométrie dans l'ultraviolet. Le solvant est constitué d'acétonitrile et d'eau, auquel peut être ajouté de l'acide trifluoracétique, permettant de réduire le temps de rétention du pic de l'uranium. Mais cette méthode ne permet pas le dosage simultané par chromatographie en phase liquide du plutonium et de l'uranium.

Ainsi, les procédés connus ne s'appliquent ni au dosage du plutonium par chromatographie en phase liquide, ni au dosage simultané de Pu(IV), Pu(VI), de l'uranium et des nitrates.

### Exposé de l'invention

La présente invention a précisément pour objet un procédé de dosage d'au moins un élément choisi parmi Pu(IV), Pu(VI), l'uranium et les nitrates par chromatographie en phase liquide, utilisable pour le dosage simultané de ces éléments avec de bons niveaux de précision et de reproductibilité dans une gamme étendue de concentrations (de 450 g/l à 0,001 g/l si la sensibilité du détecteur est suffisante). Ce procédé peut ainsi s'appliquer au dosage simultané des valences IV et VI du plutonium même à de faibles teneurs.

Selon l'invention, ce procédé de dosage par chromatographie en phase liquide d'au moins un élément choisi parmi les éléments suivants présents dans une solution: Pu(IV), Pu(VI), l'uranium et les nitrates, comprend les étapes suivantes :
a) injection d'un échantillon de la solution sur une phase stationnaire comprenant un support de type apolaire,
b) élution dudit échantillon par une phase liquide mobile qui comprend un contre-ion de type ammonium, l'ion sulfate, un acide à une normalité égale ou supérieure à 0,001 N, un mélange de solvants comprenant un alcool en C₁-C₄ (de un à quatre atomes de carbone), un solvant organique modificateur polaire différent d'un alcool, miscible à l'eau, et de l'eau, pour obtenir un éluat, et
c) analyse de l'éluat pour déterminer le ou les élément(s) choisi(s) présent(s) dans la solution à analyser et doser ce ou ces élément(s).

Dans ce procédé, la composition de la phase mobile constitue un élément important. En effet, l'utilisation d'une phase mobile comprenant un contre-ion de type ammonium permet de transformer la phase stationnaire apolaire en échangeur d'anions dynamique. La présence de cet ammonium quaternaire permet également l'appariement d'ions avec les complexes anioniques du plutonium et de l'uranium ainsi qu'avec les nitrates. Le contre-ion de type ammonium utilisé peut être l'ion cétyltriméthylammonium et il peut être introduit dans la phase mobile sous la forme de sel ou d'hydroxyde, de préférence d'hydroxyde.

Dans cette phase mobile, l'utilisation d'un sulfate sous forme soluble, par exemple le sulfate d'ammonium, permet de former des complexes anioniques du plutonium IV et VI et de l'uranium qui vont être retenus par la phase stationnaire apolaire transformée en échangeur d'anions dynamique.

D'autre part, on utilise de préférence un acide tel que l'acide sulfurique de normalité égale ou supérieure à 0,001 N pour régler le pH de la phase mobile liquide à une valeur appropriée afin éviter la polymérisation du plutonium sur la colonne et dans la phase mobile. Le pH de la phase mobile liquide peut être ajusté par n'importe quel acide minéral ou organique autre que l'acide sulfurique à condition que cet acide ne gêne ni le mécanisme chromatographique ni la détection. Toutefois, les acides minéraux tels que l'acide phosphorique et les hydracides d'halogène ne sont pas conseillés car ils constituent ensuite une gêne importante pour le traitement des effluents. Il en est de même pour l'acide nitrique car il augmente l'absorbance de la phase mobile dans l'ultraviolet et gêne la complexation anionique du plutonium par les sulfates.

L'alcool et l'autre solvant organique présents dans la phase mobile sont des modificateurs polaires qui permettent d'ajuster la polarité de la phase mobile :
- L'alcool a un mécanisme d'action de type accepteur de protons sur les solutés de l'échantillon à doser et il modifie la sélectivité des pics d'élution, en particulier pour le plutonium, par rapport aux autres éléments à doser. L'alcool utilisé est un alcool de faible poids moléculaire comprenant de 1 à 4 atomes de carbone (C₁-C₄), de manière à rester totalement miscible à l'eau. Il peut être choisi parmi le méthanol, l'éthanol, le propanol-1 et le propanol-2, de préférence le méthanol.
- L'autre solvant organique modificateur polaire différent d'un alcool miscible à l'eau est un modificateur polaire qui agit selon un mécanisme différent, par exemple donneur de proton ou par interaction dipole-dipole sur les solutés. Ce type de modificateur polaire est ajouté à la phase mobile pour diminuer les temps de rétention des espèces dosées et donc le temps d'analyse. Il permet également de garder une sélectivité entre les pics meilleure que ce que l'on aurait obtenu en augmentant simplement la proportion de méthanol. De préférence, on utilise un modificateur polaire à interactions dipole-dipole ; celui-ci peut être choisi parmi le tétrahydrofuranne et le dioxane, de préférence le tétrahydrofuranne. On peut aussi utiliser d'autres solvants miscibles à l'eau et présentant les mêmes propriétés de solvatation.

La phase liquide mobile comprend également de l'eau.

La colonne de chromatographie est remplie d'une phase stationnaire de type apolaire constituée par exemple par un support en silice rendue apolaire par un greffage approprié, un support polymérique et un support à base de carbone ; de préférence on utilise un support en silice greffée C1. Cette phase stationnaire apolaire permet d'assurer la rétention des paires d'ions formées à partir du contre-ion de type ammonium et des anions comprenant les composés d'intérêt qui sont les éléments à doser.

En raison de la variation des caractéristiques des colonnes préparées par les fabricants, il est quelque fois nécessaire d'adapter la composition de la phase mobile pour obtenir une bonne sélectivité des pics d'élution sur le chromatogramme des éléments dosés et une durée d'analyse appropriée. En effet, les caractéristiques des phases stationnaires dotées d'un même greffage peuvent varier d'un fabriquant à l'autre, par exemple du fait de la variation du diamètre des pores des grains de silice, du taux de greffage, de la polymérisation plus ou moins grande des sites greffés, etc..

Les constituants de la phase mobile restent toujours les mêmes mais leurs concentrations ou leurs proportions varient.

D'autre part, pour le dosage de certaines solutions, il est nécessaire de choisir une composition de la phase mobile permettant d'éliminer les pics parasites qui gênent l'intégration du pic du Pu(IV). Ainsi, les solutions de dissolution de combustibles irradiés contiennent de nombreux éléments issus de la fission de l'uranium ou du plutonium donnant lieu à de petits pics parasites qui gênent l'intégration du pic de Pu (IV). Il est donc nécessaire de modifier la composition de la phase mobile pour doser ces solutions.

A titre d'exemple, la phase mobile liquide peut comprendre en volume :
environ 60 à 65% d'eau,
environ 30% de méthanol, et
environ 5 à 10% de tétrahydrofuranne,
et contenir environ :
0,05 mol/l d'acide sulfurique,
0,1 à 0,2 mol/l de sulfate d'ammonium, et
0,005 mol/l de cétyltriméthylammonium.

Pour pallier aux problèmes rencontrés, tels que la présence de pics parasites qui gênent l'intégration des pics, la variation des caractéristiques des colonnes préparées par les fabricants ou le type des espèces à doser, il est nécessaire d'ajuster les proportions des constituants de la phase mobile. Si par exemple, le dosage du plutonium VI n'est pas demandé, la composition de la phase mobile peut être ajustée pour réduire le temps d'analyse.

Pour mettre en oeuvre le procédé de l'invention, on peut opérer de la façon suivante :

Tout d'abord, l'échantillon de la solution à doser peut être dilué dans de l'eau, dans HNO₃ 0,01 N, dans H₂SO₄ 0,01 N, dans la phase mobile ou une phase mobile tamponnée qui peut contenir des additifs appropriés choisis en fonction de la nature de la solution à doser. A titre d'exemple, on peut citer le cas de solutions contenant du plutonium à la valence VI ou III, et à la condition que le plutonium VI ne soit pas un composé d'intérêt, où il est avantageux de diluer l'échantillon dans une solution de sulfate ferreux pour amener le plutonium à la valence IV. Pour des solutions réductrices telles que le plutonium III dans l'hydrazine et l'hydroxylamine, un traitement au fer ferrique sera plus approprié. Les taux de dilution peuvent varier dans une large gamme et dépendent en particulier de la teneur et de la qualité des ions à doser. Le taux de dilution dépendra en particulier de la concentration des composés d'intérêt notamment de celui dont la teneur est la plus faible et sera conditionné également par le pH. En effet, le pH de l'échantillon dilué à analyser doit être supérieur à 1 et inférieur à 8 si l'on utilise des colonnes à base de silice.

Dans la première étape, on injecte l'échantillon dilué ou non dans la colonne qui est parcourue en continu par la phase mobile pour fixer les composés d'intérêt sur un support apolaire.

Dans la deuxième étape, on réalise l'élution des composés d'intérêt au moyen de la phase mobile. Dans cette deuxième étape, la composition de la phase mobile peut être la même ou être modifiée pour optimiser les temps de rétention de chaque composé d'intérêt. Cette optimisation sera fonction de la nature des colonnes mises en oeuvre, par exemple une phase mobile utilisée pour une colonne silice greffée C1 sera différente de celle utilisée pour une colonne de résine polymérique, et de la nature des ions à analyser, si par exemple seul le couple uranium/plutonium (IV) est d'intérêt, on a avantage à privilégier des phases mobiles plus éluantes.

Dans la troisième étape, on procéde à l'analyse qualitative et/ou quantitative des composés d'intérêt dans l'éluat. Selon un mode préféré de mise en oeuvre du procédé, l'analyse sera une analyse spectrophotométrique à une longueur d'onde choisie en fonction de la nature de la solution et de la nature et de la quantité des éléments à doser. 254 nm est la longueur d'onde la plus communément utilisée, mais dans le cas où une grande sensibilité est demandée, en particulier pour les ions nitrates, on peut utiliser, une longueur d'onde de 230 nm et dans le cas où l'on veut doser uniquement le plutonium de valence VI, on peut opérer à 830 nm.

Le procédé de l'invention peut être mis en oeuvre dans des installations de chromatographie classique comprenant :
- une pompe chromatographique garantissant par exemple des débits de 0,05 à 10 ml/min, par exemple 1 ml/min,
- une ou plusieurs vannes d'injection comportant chacune une boucle d'échantillonnage différente, par exemple de 1 et 20 µl,
- une colonne de chromatographie, remplie par exemple d'une phase stationnaire de silice greffée C1 de granulométrie de 3 µm, ayant une longueur de 100 mm et un diamètre interne de 4,6 mm,
- un détecteur spectrophotométrique travaillant par exemple à la longueur d'onde de 254 nm, et
- un dispositif d'acquisition de données pour l'intégration du chromatogramme et le pilotage.

D'autres caractéristiques et avantages de l'invention apparaîtront mieux à la lecture de la description qui suit, donnée bien entendu à titre illustratif et non limitatif, en référence aux dessins en annexe.

### Brève description des dessins

- la figure 1 représente une installation chromatographique, à une colonne, pour le dosage de plutonium IV, de plutonium VI, d'uranium et de nitrates présents dans des solutions ;
- la figure 2 représente un chromatogramme d'une solution d'un mélange d'uranium et de plutonium obtenu avec la méthode de dosage décrite par la présente invention ; et
- la figure 3 représente un chromatogramme d'une solution d'un mélange d'uranium et de plutonium obtenu avec la méthode de dosage décrite par l'art antérieur.

### Exposé détaillé d'un mode de réalisation de l'invention

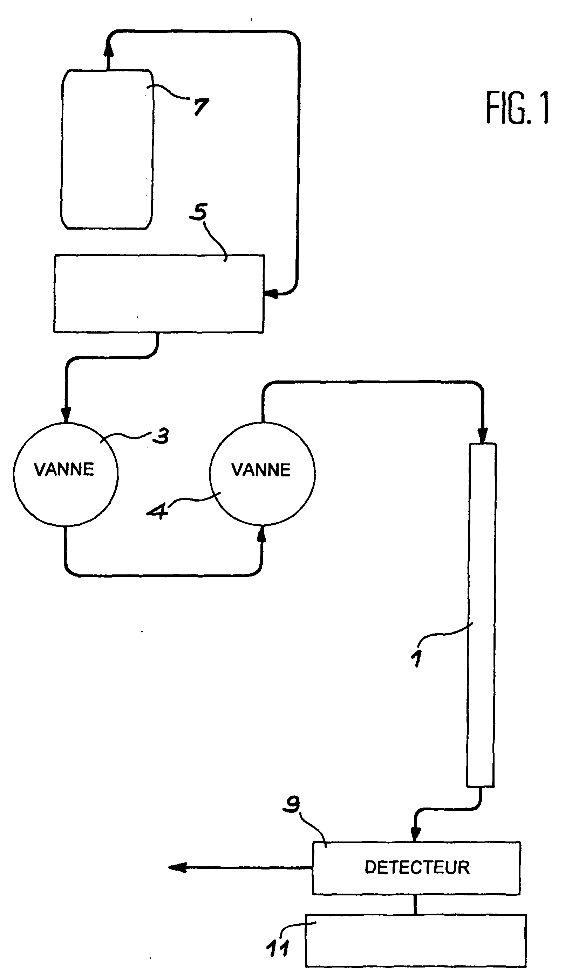

Sur la figure 1, on voit que l'installation de chromatographie comprend une colonne de chromatographie 1 dans laquelle on introduit un échantillon par l'intermédiaire d'une des deux vannes d'injection 3 et 4 munies chacune d'une boucle interne ou externe pour échantillonner le volume voulu. La première vanne 3 à volume d'injection réduit est généralement réservée aux solutions dites concentrées, par exemple :
uranium > 50 mg/l,
plutonium > 50 mg/l,
nitrates > 50 mg/l.

La deuxième vanne 4 à volume d'injection plus important est généralement réservée aux solutions dites en traces, par exemple :
uranium < 200 mg/l,
plutonium < 200 mg/l,
nitrates < 200 mg/l.

Ces deux vannes sont reliées par l'intermédiaire d'une pompe 5 à un réservoir 7 de phase mobile. A la sortie de la colonne, on détecte les composés d'intérêt au moyen du détecteur spectrophotométrique 9 associé à un intégrateur calculateur 11.

On utilise l'installation de la figure 1 pour doser les composés d'intérêt dans une solution aqueuse en utilisant une phase mobile ayant la composition suivante :
60% d'eau,
30% d'éthanol,
10% de tétrahydrofurane
et contenant :
0,05 mol/l d'acide sulfurique,
0,1 mol/l de sulfate d'ammonium,
0,005 mol/l de cétyltriméthylammonium.
Dans ce cas, on dilue tout d'abord un échantillon de 0,5 ml de la solution à doser par 9,5 ml d'une solution d'acide nitrique à 0,01 mol/l, puis on injecte 1 µl de l'échantillon dans la colonne de chromatographie par l'intermédiaire de la vanne 3. On fait circuler la phase mobile dans la colonne à un débit de 1 ml/min, la colonne a une longueur de 100 mm et un diamètre intérieur de 4,6 mm et elle est remplie d'une phase stationnaire à base de silice greffée de type C1 de granulométrie 3 µm.

La dénomination C1 est une dénomination commerciale, elle correspond à un greffage méthyl sur des sites silanols présents à la surface et dans les pores des grains de silice de la phase stationnaire. Suivant les réactifs employés lors de la préparation de la phase stationnaire, les groupements fonctionnels présents sur les grains de silice sont de trois types :
≡ Si-CH₃,
= Si(CH₃)₂, et
- Si(CH₃)₃.

On détecte en sortie de colonne au moyen du détecteur spectrophotométrique 9 les pics correspondants au plutonium (IV), au plutonium (VI), à l'uranium et aux ions nitrates, et on mesure la surface de ces pics à l'aide de l'intégrateur 11.

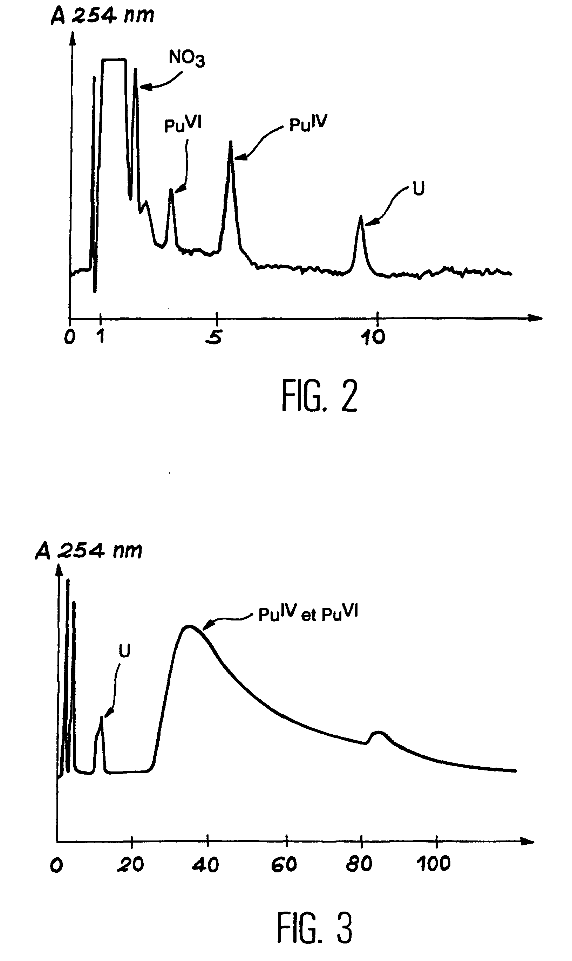

La figure 2 est le chromatogramme obtenu dans ces conditions, qui montre en abscisse les temps d'élution des différents éléments d'intérêt : ils sont, de l'ordre de 3,2 min pour le nitrate, 4,2 min pour le plutonium de valence (VI), 5,5 min pour le plutonium de valence (IV) et 9,5 min pour l'uranium (VI).

Pour l'analyse quantitative, on se reporte alors aux courbes d'étalonnage, qui ont été obtenues en effectuant les mêmes opérations sur des échantillons dont on connaît les concentrations en éléments d'intérêt, et on détermine ainsi la teneur de chaque élément dans l'échantillon analysé.

On peut effectuer le même dosage sur une solution organique comprenant par exemple du tributylphosphate, contenant les éléments d'intérêt, mais dans ce cas, après dilution de l'échantillon par une solution d'acide nitrique 0,01 mol/l, ou par une solution d'acide sulfurique à 0,01 mol/l, ou par la phase mobile, on agite fortement et on laisse décanter, puis on injecte par exemple 1 µl de la phase inférieure et on réalise la suite des opérations de la même façon.

L'intervalle de confiance du résultat d'analyse a pour amplitude relative au niveau de confiance de 95% :

| | | |
|---|---|---|
| Uranium | (+/-) 0,5% | pour des concentrations en uranium supérieures à 1 g/l, et |
| | (+/-) 2% | pour des concentrations en uranium inférieures à 1 g/l. |
| Plutonium | (+/-) 1% | pour des concentrations en plutonium supérieures à 1 g/l, et |
| | (+/-) 5% | pour des concentrations en plutonium inférieures à 1 g/l. |
| Nitrates | (+/-) 0,5% | pour des concentrations supérieures à 1 g/l, et |
| | (+/-) 2% | pour des concentrations inférieures à 1 g/l. |

La figure 3 représente à titre comparatif le chromatogramme obtenu sur la même solution en utilisant la méthode de dosage décrite par FR-A-2 691 542. Ce chromatogramme fait apparaître clairement que le plutonium n'est pas dosable avec la phase mobile du brevet FR-A-2 691 452 car la composition de la phase mobile et son pH trop élevé provoquent la polymérisation du plutonium et rendent impossible son intégration.

la comparaison des figures 2 et 3 permet de rendre compte des avantages apportés par la présente invention :
- dosage simultané d'au moins un élément choisi parmi Pu(IV), Pu(VI), l'uranium et les nitrates,
- meilleure sélectivité des pics,
- bon niveau de précision et de reproductibilité,
- dosage possible pour des quantités très variables en éléments d'intérêt (de 0,001 g/l à 450 g/l).

## Revendications

1. Procédé de dosage d'au moins un élément choisi parmi les éléments suivants présents dans une solution: Pu(IV), Pu(VI), l'uranium et les nitrates, par chromatographie en phase liquide, le procédé comprenant les étapes suivantes :
a) injection d'un échantillon de ladite solution sur une phase stationnaire comprenant un support de type apolaire,
b) élution dudit échantillon par une phase liquide mobile qui comprend un contre-ion de type ammonium, l'ion sulfate, un acide à une normalité égale ou supérieure à 0, 001 N, un mélange de solvants, pour obtenir un éluat, et
c) analyse de l'éluat pour déterminer le ou les élément(s) choisi(s) présent(s) dans la solution à analyser, et doser ce ou ces élément(s),
le procédé **caractérisé en ce que** le mélange de solvants comprend un alcool en C₁-C₄, un solvant organique modificateur polaire différent d'un alcool, miscible à l'eau, et de l'eau.

2. Procédé selon la revendication 1, **caractérisé en ce que** l'on dose la concentration du ou des éléments dans l'éluat par spectrophotométrie.

3. Procédé selon la revendication 1, **caractérisé en ce que** ledit solvant organique modificateur polaire agit par interaction dipole-dipole.

4. Procédé selon la revendication 3, **caractérisé en ce que** ledit solvant organique modificateur polaire est du tétrahydrofuranne (THF) ou du dioxane.

5. Procédé selon la revendication 1, **caractérisé en ce que** ledit alcool en C₁-C₄ est du méthanol (MeOH).

6. Procédé selon la revendication 1, **caractérisé en ce que** ledit contre-ion de type ammonium est l'ion cétyltriméthylammonium (CTA⁺).

7. Procédé'selon la revendication 1, **caractérisé en ce que** ledit acide est l'acide sulfurique.

8. Procédé selon la revendication 1, **caractérisé en ce que** la phase mobile comprend en volume :
environ 60 à 65% d'eau,
environ 30% de méthanol, et
environ 5 à 10% de tétrahydrofuranne,
et contient environ :
0,05 mol/l d'acide sulfurique,
0,1 à 0,2 mol/l de sulfate d'ammonium, et
0,005 mol/l de cétyltriméthylammonium.

9. Procédé selon la revendication 1, **caractérisé en ce que** ladite phase stationnaire de type apolaire est choisie parmi un support de silice greffée avec des molécules organiques, un support polymérique et un support à base de carbone.

10. Procédé selon la revendication 2, **caractérisé par** l'analyse simultanée par spectrophotométrie à 254 nm et à 230 nm d'au moins deux éléments choisis parmi Pu(IV), Pu(VI), uranium et nitrate dans l'éluat.

11. Procédé selon la revendication 2, **caractérisé en ce que** l'éluat est analysé à 830 nm pour le Pu(VI).

## Patentansprüche

1. Verfahren der quantitativen Bestimmung von mindestens einem Element, das aus den im Folgenden, in einer Lösung vorhandenen Elementen: Pu(IV), Pu(VI), Uran und Nitrate, ausgewählt ist, durch Flüssigchromatographie, wobei das Verfahren die folgenden Stufen umfasst:
a) Injektion einer Probe der Lösung auf eine stationäre Phase, die einen Träger des apolaren Typs umfasst,
b) Elution der Probe durch eine mobile flüssige Phase, die ein Gegenion des Ammonium-Typs, Sulfationen, eine Säure einer Normalität, die gleich oder größer als 0,001 N ist, ein Lösemittelgemisch umfasst, wobei das Verfahren **dadurch gekennzeichnet ist, dass** das Lösemittelgemisch einen C₁-C₉-Alkohol, ein mit Wasser mischbares, von einem Alkohol verschiedenes polaritätsmodifizierendes organisches Lösemittel und Wasser umfasst, wobei ein Eluat erhalten wird, und
c) Analyse des Eluats, um das oder die in der zu analysierenden Lösung vorhandene(n) gewählte(n) Element(e) zu bestimmen und das oder die Element(e) quantitativ zu bestimmen.

2. Verfahren nach Anspruch 1, **dadurch gekennzeichnet, dass** die Konzentration des oder der Elemente im Eluat durch Spektrophotometrie quantitativ bestimmt wird.

3. Verfahren nach Anspruch 1, **dadurch gekennzeichnet, dass** das polaritätsmodifizierende organische Lösemittel durch Dipol-Dipol-Wechselwirkung wirkt.

4. Verfahren nach Anspruch 3, **dadurch gekennzeichnet, dass** das polaritätsmodifizierende organische Lösemittel Tetrahydrofuran (THF) oder Dioxan ist.

5. Verfahren nach Anspruch 1, **dadurch gekennzeichnet, dass** der C₁-C₄-Alkohol Methanol (MeOH) ist.

6. Verfahren nach Anspruch 1, **dadurch gekennzeichnet, dass** das Gegenion des Ammonium-Typs das Cetyltrimethylammoniumion (CTA⁺) ist.

7. Verfahren nach Anspruch 1, **dadurch gekennzeichnet, dass** die Säure Schwefelsäure ist.

8. Verfahren nach Anspruch 1, **dadurch gekennzeichnet, dass** die mobile Phase, bezogen auf das Volumen:
etwa 60 bis 65 % Wasser,
etwa 30 % Methanol und
etwa 5 bis 10% Tetrahydrofuran umfasst
und etwa:
0,05 mol/l Schwefelsäure,
0,1 bis 0,2 mol/l Ammoniumsulfat und
0,005 mol/l Cetyltrimethylammonium enthält.

9. Verfahren nach Anspruch 1, **dadurch gekennzeichnet, dass** die stationäre Phase des apolaren Typs aus einem Träger von mit organischen Molekülen gepfropftem Siliciumdioxid, einem Polymerträger und einem Träger auf Kohlebasis ausgewählt ist.

10. Verfahren nach Anspruch 2, das durch die gleichzeitige Analyse durch Spektrophotometrie bei 254 nm und 230 nm von mindestens zwei Elementen, die aus Pu(IV), Pu(VI), Uran und Nitrat ausgewählt sind, im Eluat gekennzeichnet ist.

11. Verfahren nach Anspruch 2, das **dadurch gekennzeichnet ist, dass** das Eluat bei 830 nm auf Pu(VI) analysiert wird.

## Claims

1. Process for measuring at least one of the elements chosen from among the following elements present in a solution: Pu (IV), Pu (VI), uranium and nitrates, by liquid phase chromatography, the process comprising the following stages:
a) injection of a sample of the solution on a stationary phase comprising an apolar-type support,
b) elution of said sample by a mobile liquid phase which comprises a counter-ion of ammonium type, sulphate ion, an acid of a normality equal to or greater than 0.001 N, a mixture of solvents, the process being **characterized in that** the mixture of solvents comprises an alcohol in C₁-C₄, a polar modifying organic solvent different from an alcohol, miscible with water, and water, in order to obtain an eluate, and
c) measurement of the eluate so as to determine the chosen element(s) present in the solution to be analyzed and to measure this element or these elements.

2. Process according to claim 1, **characterized in that** the concentration of the element(s) in the eluate is measured by spectrophotometry.

3. Process according to claim 1, **characterized in that** said polar modifying organic solvent acts by dipole-dipole interaction.

4. Process according to claim 3, **characterized in that** said polar modifying organic solvent is tetrahydrofurane (THF) or dioxane.

5. Process according to claim 1, **characterized in that** said alcohol in C₁-C₄ is methanol (MeOH).

6. Process according to claim 1, **characterized in that** said counter-ion of ammonium type is the cetyltrimethylammonium ion (CTA+).

7. Process according to claim 1, **characterized in that** said acid is sulphuric acid.

8. Process according to claim 1, **characterized in that** the mobile phase comprises in volume:
about 60 to 65% of water,
about 30% of methanol, and
about 5 to 10% of tetrahydrofurane,
and contains about:
0.05 mol/l of sulphuric acid,
0.1 to 0.2 mol/l of ammonium sulphate, and
0.005 mol/l of cetyltrimethylammonium.

9. Process according to claim 1, **characterized in that** said apolar-type stationary phase is selected from among a silica support grafted with organic molecules, a polymeric support and a carbon-based support.

10. Process according to claim 2, **characterized by** the simultaneous analysis by spectrophotometry at 254 nm and 230 nm of at least two elements chosen from among Pu (IV), Pu (VI), uranium and nitrate in the eluate.

11. Process according to claim 2, **characterized in that** the eluate is analyzed at 830 nm for Pu (VI).
